Europäisches Patentamt

European Patent Office

Office européen des brevets

(19)

(11) Publication number: **0 108 982**
A2

(12) **EUROPEAN PATENT APPLICATION**

(21) Application number: 83110826.1

(22) Date of filing: 28.10.83

(51) Int. Cl.³: **G 03 B 41/18**, G 11 B 7/04

(30) Priority: 02.11.82 JP 193084/82

(71) Applicant: FUJI PHOTO FILM CO., LTD., 210 Nakanuma Minamiashigara-shi, Kanagawa-ken (JP)

(43) Date of publication of application: 23.05.84
Bulletin 84/21

(72) Inventor: Tamura, Kaoru c/o Fuji Photo Film Co., Ltd., No. 798 Miyanodai, Kaisei-machi Ashigarakami-gun (JP)
Inventor: Torii, Shumpeita c/o Fuji Photo Film Co., Ltd., No. 798 Miyanodai, Kaisei-machi Ashigarakami-gun (JP)

(74) Representative: Patentanwälte Grünecker, Dr. Kinkeldey, Dr. Stockmair, Dr. Schumann, Jakob, Dr. Bezold, Meister, Hilgers, Dr. Meyer-Plath, Maximilianstrasse 58, D-8000 München 22 (DE)

(84) Designated Contracting States: DE FR NL

(54) Cassette for stimulable phosphor sheet.

(57) A cassette for removably housing a stimulable phosphor sheet for storing a radiation image therein comprises a flat box-like front plate and a cover member openably coupled with the front plate. A piled material or a foamed material is secured to the inner surface of the front plate, and a resilient layer is secured to the inner surface of the cover member, thereby protecting the stimulable phosphor sheet housed in the cassette.

## BACKGROUND OF THE INVENTION

### Field of the Invention

This invention relates to a cassette for housing a stimulable phosphor sheet.

### Description of the Prior Art

When certain kinds of phosphors are exposed to a radiation such as X-rays, α-rays, β-rays, γ-rays or ultraviolet rays, they store a part of the energy of the radiation. Then, when the phosphor which has been exposed to the radiation is exposed to stimulating rays such as visible light, light is emitted from the phosphor in proportion to the stored energy of the radiation. A phosphor exhibiting such properties is referred to as a stimulable phosphor.

As disclosed in U.S. Patent No. 4,258,264 and Japanese Unexamined Patent Publication No. 56(1981)-11395, it has been proposed to use a stimulable phosphor in a radiation image recording and reproducing system. Specifically, a sheet provided with a layer of the stimulable phosphor (hereinafter referred to as a stimulable phosphor sheet or simply as a sheet) is first exposed to a radiation passing through an object to have a radiation image stored therein, and is then scanned with stimulating rays such as a laser beam which cause it to emit light in the pattern of the stored image. The light emitted from the stimulable phosphor sheet upon stimulation thereof is photoelectrically detected and converted to an electric image signal, which is processed as desired to reproduce a visible image on a recording medium such as a photographic material or on a display device such as a cathode ray tube (CRT).

This radiation image recording and reproducing system using the stimulable phosphor sheet is advantageous over conventional radiography using a silver halide photographic material in that the image can be recorded over a very wide range (latitude) of radiation exposure and further in that the electric signal used for reproducing the visible image can be freely processed to improve the image quality for viewing, particularly for diagnostic purposes. In more detail, since the amount of light emitted upon stimulation after the radiation energy is stored in the phosphor varies over a very wide range in proportion to the amount of energy stored therein, it is possible to obtain an image having desired density regardless of the amount of exposure of the phosphor to the radiation by reading out the emitted light with an appropriate read-out gain and converting it to an electric signal to reproduce a visible image on a recording medium or a display device. The electric signal may further be processed as desired to obtain a radiation image suitable for viewing, particularly for diagnostic purposes. This is very advantageous in practical use.

The stimulable phosphor sheets used in the aforesaid radiation image recording and reproducing system are handled in the form housed in a cassette for containing a single stimulable phosphor sheet or in a magazine for containing many stimulable phosphor sheets. After radiation images are stored in the stimulable phosphor sheets, the cassettes or the magazine containing the stimulable phosphor sheets carrying the radiation images stored therein is loaded into a sheet feeding apparatus,

- 3 -

i.e. a cassette feeder or a magazine feeder, from which the stimulable phosphor sheets are fed one by one to a radiation image read-out apparatus.

The aforesaid cassette used to house a single stimulable phosphor sheet is formed in the same manner as the conventional X-ray film cassette. Namely, the cassette comprises a flat box-like front plate and a cover member for covering the front plate. The stimulable phosphor sheet is housed in the cassette so that the stimulable phosphor layer side of the stimulable phosphor sheet stands face to face with the inner surface of the front plate. Recording of a radiation image by use of a radiation such as X-rays is conducted by positioning the cassette housing the stimulable phosphor sheet as described above at a point exposed to the radiation emitted from a radiation source and passing through an object.

As described above, recording of a radiation image in the stimulable phosphor sheet is conducted by using the sheet in the form housed in the cassette. However, read-out of the radiation image stored in the sheet is conducted by taking the sheet out of the cassette and scanning the sheet with stimulating rays.

In the radiation image read-out step, since the stimulable phosphor sheet is taken out of the cassette, the stimulable phosphor layer of the sheet housed in the conventional cassette is readily scratched by the inner surface of the front plate of the cassette when the sheet is taken out of the cassette. Further, the stimulable phosphor layer of the sheet is readily scratched by the inner surface of the front plate of the cassette also when the sheet is inserted into the cassette.

## SUMMARY OF THE INVENTION

The primary object of the present invention is to provide a cassette for a stimulable phosphor sheet, which prevents the sheet from being scratched when the sheet is taken out of the cassette.

Another object of the present invention is to provide a cassette for a stimulable phosphor sheet, which prevents the sheet from being scratched also when the sheet is inserted into the cassette, thereby prolonging the life of the sheet.

The cassette for a stimulable phosphor sheet in accordance with the present invention is characterized by the provision of a piled material, for example, piled cloth such as velvet or piled paper, or a foamed material made of polyethylene or the like, which is secured to the inner surface of a front plate of the cassette.

The piled material or the foamed material as described above is very soft and does not scratch the stimulable phosphor layer of the stimulable phosphor sheet even when the piled material or the foamed material comes in contact with the stimulable phosphor layer. Further, since the piled material or the foamed material exhibits a very high transmittance to X-rays, it does not adversely affect the amount of X-rays to which the stimulable phosphor layer of the sheet is exposed.

## BRIEF DESCRIPTION OF THE DRAWINGS

Figure 1 is a partially cutaway perspective view showing an embodiment of the cassette in accordance with the present invention,

Figure 2 is a schematic view showing the manner in which the cassette of Figure 1 is used for recording a radiation image, and

Figure 3 is a schematic view showing the manner in which the cassette of Figure 1 is used in the radiation image read-out step.

## DESCRIPTION OF THE PREFERRED EMBODIMENTS

The present invention will hereinbelow be described in further detail with reference to the accompanying drawings.

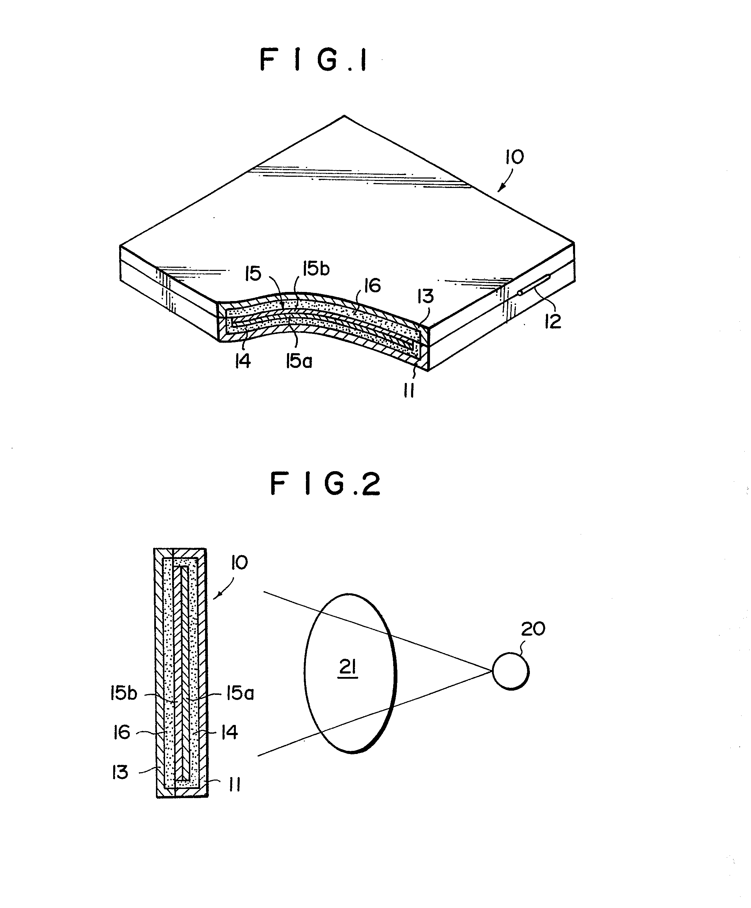

Referring to Figure 1, a cassette 10 comprises a flat box-like front plate 11 and a cover member 13 mounted on the front plate 11 by a hinge 12 for openably covering the front plate 11. On the side opposite to the side provided with the hinge 12 is positioned a latch means (not shown) for coupling the front plate 11 and the cover member 13 with each other.

To the inner surface of the front plate 11 is secured a piece of piled cloth 14 such as velvet so that the base side of the piled cloth 14, i.e. the side opposite to the piled side, contacts the inner surface of the front plate 11. A stimulable phosphor sheet 15 is housed in the front plate 11 so that a stimulable phosphor layer 15a of the sheet 15 contacts the piled cloth 14 and a substrate 15b of the sheet 15 stands face to face with the cover member 13. To the inner surface of the cover member 13 is secured a sponge-like resilient layer 16 for resiliently pressing and holding the stimulable phosphor sheet 15.

The front plate 11 and the cover member 13 of the cassette 10 may be made of a metal or a hard plastic permeable to a radiation. Openable coupling of the front plate 11 with the cover member 13 need not necessarily be effected by using a hinge. For example, the front plate 11 and the cover member 13 may be separably coupled by a latch or the like. Further, the resilient layer 16 need not be a sponge-like material. Instead, for example, a rigid plate material may be resiliently supported by a leaf spring or the like.

The stimulable phosphor sheet 15 comprises the substrate 15b and the stimulable phosphor layer 15a laid on the substrate 15b. The stimulable phosphor used may be a rare earth activated strontium sulfide phosphor or a rare earth activated lanthanum oxysulfide phosphor as described in U.S. Patent No. 3,859,527, a rare earth activated alkaline earth metal fluorohalide phosphor as described in U.S. Patent No. 4,236,078, Japanese Unexamined Patent Publication No. 55(1980)-12143, 55(1980)-12145, 55(1980)-84389, 56(1981)-2385, 56(1981)-2386 or 56(1981)-74175, a rare earth activated lanthanum oxyhalide phosphor as described in Japanese Unexamined Patent Publication No. 55(1980)-12144, a copper and/or lead activated zinc sulfide phosphor or a rare earth activated alumina-barium oxide phosphor or a silica-alkaline earth metal oxide phosphor as disclosed in Japanese Unexamined Patent Publication No. 55(1980)-12142, or the like.

0108982

The cassette 10 constructed as described above is used as described below. As shown in Figure 2, in the radiation image recording step, the cassette 10 is positioned at a point where a radiation such as X-rays emitted from a radiation source 20 can reach after passing through an object 21. In this condition, the cassette 10 is exposed to the radiation to have a radiation image of the object 21 stored in the stimulable phosphor layer 15a of the sheet 15 contained in the cassette 10.

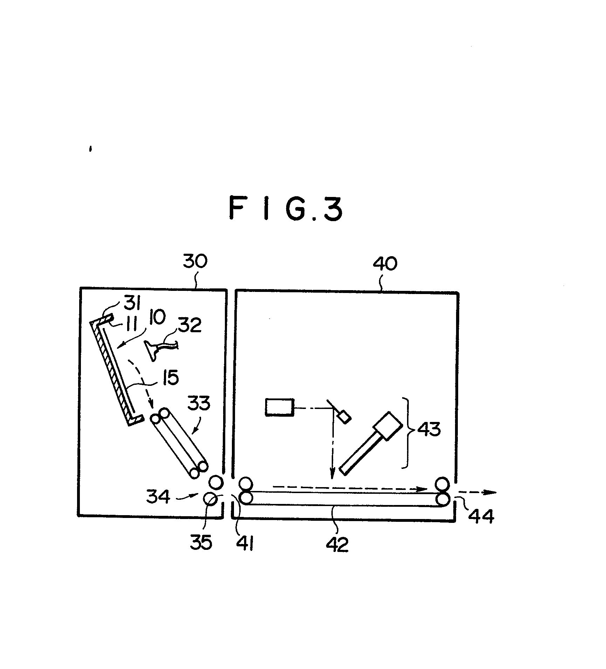

After the radiation image is stored in the sheet 15 as described above, the radiation image is read out by using a radiation image read-out system as shown in Figure 3. In Figure 3, the cover member of the cassette 10 containing the sheet 15 is opened, and the cassette 10 is loaded into a cassette loading section 31 of a cassette feeder 30. Then, the sheet 15 contained in the front plate 11 of the cassette 10 is sucked by a suction arm 32 and taken out of the cassette 10. The suction arm 32 is moved to introduce the forward end of the sheet 15 (i.e. the lower end thereof in the drawing) to the section between a pair of endless belts 33, and then air suction of the suction arm 32 is stopped. The sheet 15 is sent by the endless belts 33 to an outlet 35 via a pair of nip rollers 34, and ejected from the outlet 35. At the outside of the outlet 35 is positioned a sheet inlet 41 of a radiation image read-out apparatus 40. The sheet 15 ejected from the outlet 35 of the cassette feeder 30 is introduced from the sheet inlet 41 into the radiation image read-out apparatus 40, and placed on a horizontal conveying belt 42 in the apparatus 40. Above the horizontal conveying belt 42 is positioned an image read-out system 43 for scanning the sheet 15 with stimulating rays such as a laser beam which cause the sheet 15 to emit light in proportion to the radiation image stored therein, and photoelectrically reading out the emitted light. While the sheet 15 is conveyed by the horizontal conveying belt 42, the radiation image stored in the sheet 15 is read out by the image read-out system 43. After the radiation image read-out is finished, the sheet 15 is ejected from a sheet outlet 44. Then, the radiation energy remaining in the sheet 15 ejected from the sheet outlet 44 is erased, and the sheet 15 is again housed in a cassette for use in recording of a radiation image.

As described above, in the cassette feeder 30, the sheet 15 is taken out of the cassette 10. At this time, the stimulable phosphor layer 15a of the sheet 15 becomes rubbed against the inner surface of the front plate 11 of the cassette 10. However, since the piled cloth 14 is provided on the inner surface of the front plate 11, the stimulable phosphor layer 15a becomes rubbed against the soft pile of the piled cloth 14. Therefore, there is no risk of the stimulable phosphor layer 15a being scratched. Further, even when fine dust enters the cassette 10, the dust is caught in the pile of the piled cloth 14 and does not accumulate on the surface of the piled cloth 14. Therefore, there is little risk of the stimulable phosphor layer 15a of the sheet 15 being scratched by dust. The above applies also when the sheet 15 is introduced into the cassette 10.

The same effects as the effects of the aforesaid piled cloth are obtained also when, instead of the piled cloth 14, piled paper wherein the paper fibers are raised from the paper surface, or a foamed material made of polyethylene or the like is secured to the inner surface of the front plate 11 of the cassette 10. From the viewpoint of the softness and resiliency, the foamed material should preferably be a polyethylene material foamed to volume 20 times the original volume. The foamed material of this type exhibits an X-ray transmittance higher than the transmittance of the piled cloth or the piled paper. Accordingly, from the viewpoint of the permeability to radiation, the material secured to the inner surface of the front plate 11 of the cassette 10 should preferably be a foamed material. However, the piled material is advantageous over the foamed material in that it exhibits excellent slip properties. Therefore, the piled material or the foamed material should be selected appropriately according to the requirement.

In the embodiment described above, the piled cloth 14 is secured only to the front plate 11 of the cassette 10. However, in order to protect the substrate 15b of the sheet 15 or to protect the stimulable phosphor layer 15a when the sheet 15 is housed in the cassette 10 with the stimulable phosphor layer 15a facing the cover member side, it is possible to secure the piled material or the foamed material also to the inner surface of the cover member 13.

## C L A I M S

1. A cassette for removably housing a stimulable phosphor sheet for storing a radiation image therein, which comprises a piled material or a foamed material secured to an inner surface of a cassette front plate.

2. A cassette as defined in Claim 1 wherein a cover member is openably coupled with said front plate, and a resilient layer is secured to the inner surface of said cover member.

3. A cassette as defined in Claim 2 wherein said resilient layer is in the form of sponge.

4. A cassette as defined in Claim 1 wherein said piled material is selected from the group consisting of piled cloth and piled paper.

5. A cassette as defined in Claim 1 wherein said foamed material is a foamed polyethylene material.

# F I G.1

# F I G.2

# F I G.3